# EUROPEAN PATENT APPLICATION

(11) **EP 3 741 608 A1**
(43) Date of publication of application: **25.11.2020**
(21) Application number: 19175913.3
(22) Date of filing: 22.05.2019
(51) Int. Cl.: B60L 9/00, B60L 50/53, B60L 58/13

(54) **MINING VEHICLE**

(71) Applicant: Sandvik Mining and Construction Oy, 33330 Tampere (FI)
(72) Inventor: KOUVO, Mr. Mikko, 16273 Vällingby (SE); JUNTUNEN, Raimo, 33330 Tampere (FI); KITULA, Mikko, 33330 Tampere (FI); VERHO, Samuli, 33330 Tampere (FI); MIKKOLA, Jussi, 33330 Tampere (FI); TEPPO, Jouni, 33330 Tampere (FI); ERIKSSON, Harri, 33330 Tampere (FI); VATANEN, Harri, 33311 Tampere (FI)
(74) Representative: Sandvik

(57) **Abstract**

A mining vehicle comprises a traction mechanism for propelling the mining vehicle, a traction motor for driving said traction mechanism, a cable connection for connecting the mining vehicle to an external source of electric energy, and an electric power link between said cable connection and said traction motor for conveying electric energy from said cable connection to said traction motor. Said electric power link comprises a DC power link. The mining vehicle comprises a traction DC/AC converter for converting DC power from said DC power link into AC power for feeding into said traction motor.

## Description

### FIELD OF THE INVENTION

The invention relates in general to electrically driven mining vehicles, such as electrically driven loaders, drilling jumbos, or the like. In particular the invention relates to the architecture of the electric energy delivering and storage system on board such a mining vehicle.

### BACKGROUND OF THE INVENTION

Electrically driven mining vehicles have a number of advantages in comparison to ones driven with internal combustion engines, such as the absence of exhaust fumes and the independence from fuel delivery. As long as battery technology does not allow high enough storage densities of electric energy it is not feasible to assume that heavy mining vehicles could rely solely on onboard batteries for meaningful lengths of time in operation, which means that they require a connection to an electricity grid in the mine. A conventional solution is to build an AC electricity grid in the mine, to which the electrically driven mining vehicle connects with a long cable, a sufficient length of which is rolled out from a cable drum or reel at the back of the vehicle. Another possibility is a trolley-type solution in which overhead wires constitute the external source of electricity, and the vehicle connects to them with spring-loaded trolley poles.

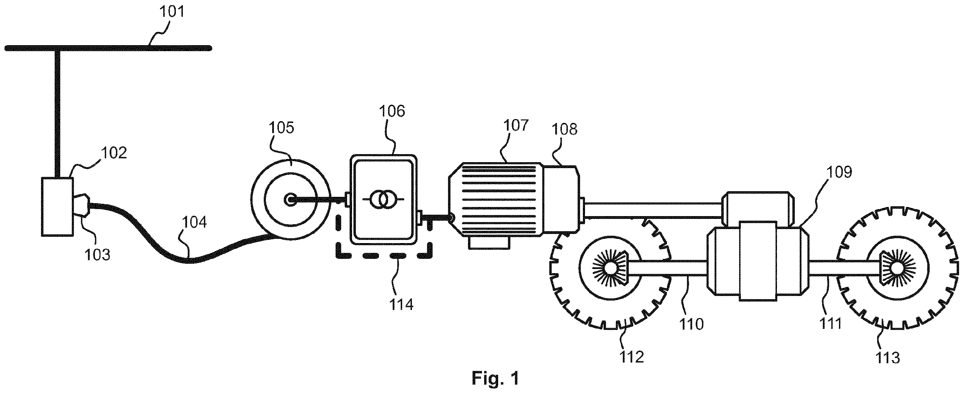

Fig. 1 illustrates schematically some components of a conventional electrically driven mining vehicle. The electricity grid 101 of a mine comprises connection points 102, to which the connector 103 of the mining vehicle can be coupled. A sufficient length of a thick cable 104 is rolled out of a drum or reel 105 to allow the vehicle to reach its working location. A transformer 106 may be used to transform the grid voltage, typically in the order of 1000V AC, to a lower voltage level such as 400V AC that can be fed into an induction motor 107. Another possibility is to rate the induction motor 107 directly to the grid voltage, in which case the transformer 106 is not needed, as shown by the dashed-line connection 114 in fig. 1. A torque converter 108 couples the induction motor 107 to the transmission 109 of the vehicle, from which there are drive shafts 110 and 111 to the driving wheels 112 and 113. A hydraulic pump can be connected directly to the transmission where it rotates always when the electric motor receives electric power from the grid, so that hydraulic power is controlled with choking valves. As an alternative electric power can be taken from e.g. the secondary side of the transformer 106, to hydraulic pumps that are used to maintain pressure in the hydraulic systems that are used for the working mechanisms, for automatically operating the cable reel 105, and other such purposes.

One drawback of a conventional vehicle like that of fig. 1 is its dependency of a constant supply of electricity from the electricity grid 101. If the vehicle should move further away from the connection point 102 than the length of its cable 104 allows, for example to change to an area served by another connection point, it must be towed or accompanied by a generator carriage. Another drawback is the inherent inflexibility of the combination of an induction motor 107 and a mechanical transmission 109. The induction motor 107 rotates at an essentially constant rate defined by the frequency of the AC voltage of the grid, so the driving speed can only be affected mechanically by selecting a suitable gear in the transmission 109. Yet another drawback is the difficulty in increasing the electric power available for tramming, because induction motors delivering sufficient power are large: an induction motor rated for more than about 150 kVA would easily be prohibitively large in size.

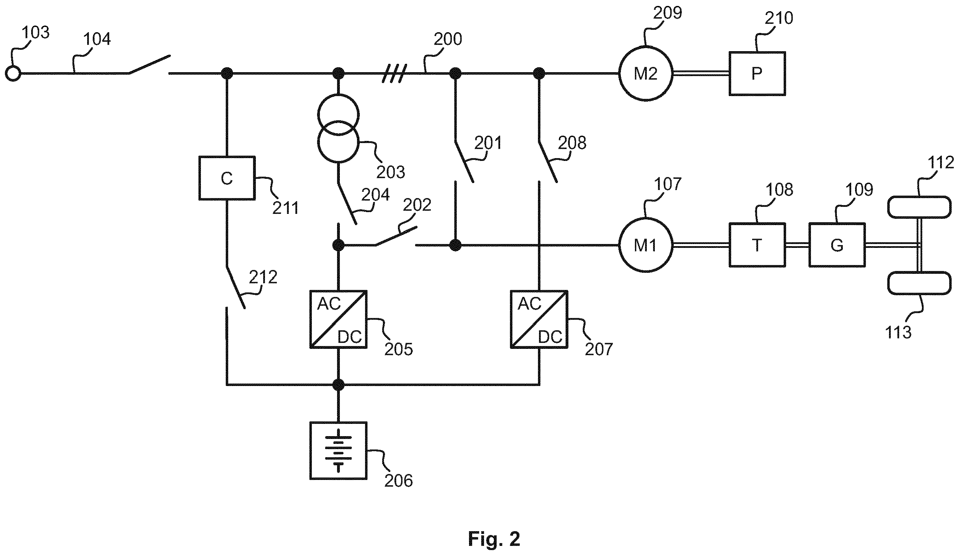

Fig. 2 illustrates an electric energy management system of an electrically driven mining vehicle known from the publication WO 2014/083239 A1. The mining vehicle comprises a traction mechanism that comprises a torque converter 108, a transmission 109, and driving wheels 112 and 113. An induction motor 107 is used as the traction motor that drivers the traction mechanism. A cable connection 103, 104 connects the mining vehicle to the electricity grid of the mine or to some other external source. The on-board electric power link 200 of the mining vehicle is essentially an AC power link, so that when the operating power to the traction motor 107 comes from the external source, switch 201 is conductive and switch 202 is nonconductive. A transformer 203, switch 204, and inverter 205 can be used to temporarily feed electric energy from a battery 206 to the AC power link 200 when there is no connection to the electricity grid. Another inverter 207 can be used to feed power directly to the actuator motor(s) 209 that drive for example hydraulic pump(s) 210. A battery charger 211 and a switch 212 can be used to recharge the battery 206 when the connection to the electricity grid is available.

A drawback of the prior art arrangement of fig. 2 is again the relatively large size of the components as well as their relatively large number, and the corresponding difficulties in fitting them in a mining vehicle, in particular if an existing vehicle design is to be converted into battery-backed electric use.

### SUMMARY

It is an objective of the invention to present an electrically driven mining vehicle in which the disadvantageous features of prior art are mitigated or avoided. Another objective of the invention is to present an electrically driven mining vehicle that has a powerful driving mechanism for its size and weight. A further objective of the invention is to present an electrically driven mining vehicle that has flexibility in its driving properties. Yet another objective of the invention is to present an electrically driven mining vehicle that is suitable for autonomous operation in at least some operating ranges.

These and further advantageous objectives are achieved with a mining vehicle that has the features listed in the appended independent claim. The depending claims describe further advantageous embodiments of the invention.

According to an aspect there is provided a mining vehicle that comprises a traction mechanism for propelling the mining vehicle, a traction motor for driving said traction mechanism, a cable connection for connecting the mining vehicle to an external source of electric energy, and an electric power link between said cable connection and said traction motor for conveying electric energy from said cable connection to said traction motor. Said electric power link comprises a DC power link, and the mining vehicle comprises a traction DC/AC converter for converting DC power from said DC power link into AC power for feeding into said traction motor.

According to an embodiment said traction motor is a permanent magnet AC motor. This involves the advantage that an electric motor with high power to volume ration can be used, saving space on board the mining vehicle for other components.

According to an embodiment said traction DC/AC converter is a frequency converter drive. This involves the advantage that flexible control with good efficiency can be obtained over the rotating speed of the traction motor.

According to an embodiment the mining vehicle comprises a local electric energy storage coupled to said DC power link for providing electric power to said DC power link at least for durations when said cable connection is not connected to any external source of electric energy. This involves the advantage that the mining vehicle can be driven and/or otherwise operated even without a connection to an external source of electric energy at least for certain periods, and that the local electric energy storage can be used as a sink of regenerated energy on board the mining vehicle.

According to an embodiment a DC/DC converter is coupled between said local electric energy storage and said DC power link for performing voltage conversion between a battery voltage level and a power link voltage level. This involves the advantage that voltage levels at various parts of the onboard power system can be tuned to the most optimal levels.

According to an embodiment the mining vehicle comprises a battery charger configured to selectively charge said local electric energy storage when excess energy is available on the DC power link. This involves the advantage that the local electric energy storage can be kept at a suitable level of charge so that it is ready for use when needed.

According to an embodiment said battery charger is configured to perform said selective charging of said local electric energy storage with electric energy originating from at least one of the following: electric energy drawn from said external source through said cable connection, electric energy regenerated in the mining vehicle. This involves the advantage of improving efficiency, because regenerated energy can be utilized later and the operation of the mining vehicle can be adapted according to the availability of energy from an external source.

According to an embodiment the mining vehicle comprises a charge level controller configured to maintain a charge level of said local electric energy storage at a predetermined level when said cable connection is connecting the mining vehicle to the external source. This involves the advantage of maintaining extensive control of what actually happens to the charge level of the local electric energy storage.

According to an embodiment said charge level controller is controllable for allowing dynamic setting of said predetermined level. This involves the advantage that the use of the local electric energy storage can be adapted to situations with varying needs, like tramming from one location to another or working in conditions where braking through regenerating occurs from time to time.

According to an embodiment the mining vehicle comprises a boost energy controller configured to selectively feed electric energy from said local electric energy storage to said DC power link when said cable connection is connecting the mining vehicle to the external source for temporarily boosting the amount of electric energy available on the DC power link to more than is available through said cable connection. This involves the advantage that a higher peak power is available on board the mining vehicle even if the external energy source and/or the cable connection are not dimensioned for such high peak power.

According to an embodiment a rated voltage of said DC power link is between 565 and 1000 VDC. This involves the advantage that a reasonable balance can be found between voltage and current values that are needed to provide sufficient power from the DC power link to motors and other systems on board the mining vehicle.

According to an embodiment the rated voltage of said DC power link is one of: 650-750 VDC, 925-1000 VDC, 565-750 VDC. Each of these voltage ranges involves its own advantages concerning adaptability for use in heavy duty electric motors, adaptability for the use of industry grade batteries as the local electric energy storage, and sufficient headroom for voltage conversions.

According to an embodiment the mining vehicle comprises one or more actuators for performing other work than propelling the mining vehicle, and one or more actuator motors coupled to said DC power link through their respective drives for driving said actuator motors with electric energy drawn from the DC power link. This involves the advantage that power available on the DC power link can be utilized in a versatile manner on board the mining vehicle.

According to an embodiment said cable connection is a DC cable connection. This involves the advantage that a transformer is not needed on board the mining vehicle, so there is more space and weight quota available for other parts of the mining vehicle, such as batteries.

According to an embodiment said cable connection is an AC cable connection, and the mining vehicle comprises an AC to DC converter between said cable connection and said DC power link for making voltage conversion between an AC voltage of said cable connection and a DC voltage of said DC power link. This involves the advantage that the mining vehicle can be made compatible with a large range of existing electricity grids in typical application environments of mining vehicles.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a mining vehicle according to prior art,
**figure 2** illustrates a known electric energy delivering and storage system of a mining vehicle,
**figure 3** illustrates an electrically driven mining vehicle,
**figure 4** illustrates an electric energy delivering and storage system of a mining vehicle,
**figure 5** illustrates an electric energy delivering and storage system of a mining vehicle,
**figure 6** illustrates an electric energy delivering and storage system of a mining vehicle,
**figure 7** illustrates an electric energy delivering and storage system of a mining vehicle,
**figure 8** illustrates operations related to charging and discharging a local electric energy storage, and
**figure 9** illustrates strategies of power management.

### DETAILED DESCRIPTION

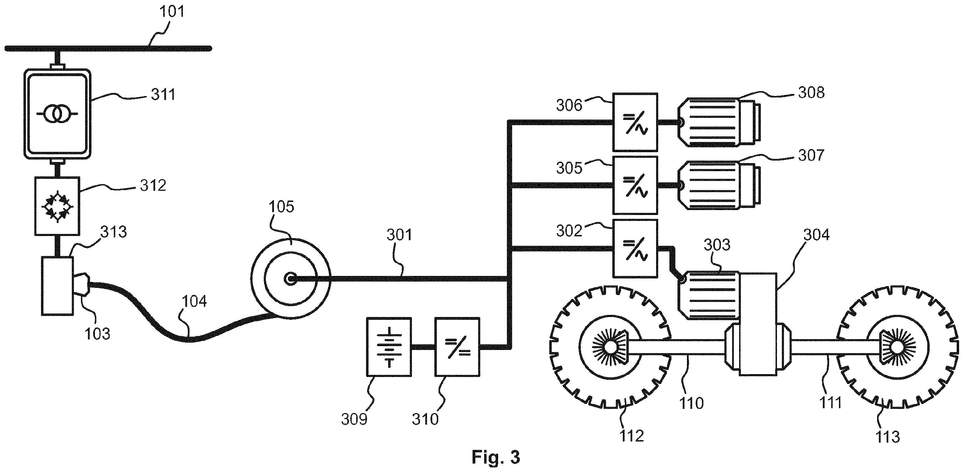

Fig. 3 illustrates schematically an electrically driven mining vehicle. The mining vehicle may be for example a loader, a drilling rig, or other kind of vehicle the primary intended operation environment of which is in a mine or quarry or the immediate surroundings of one, where operating conditions involve mining, excavating, stoping, or otherwise extracting heavy loads of ore, rock, and soil; as well as loading and transporting such loads on rough and difficult ground.

A traction mechanism is provided for propelling the mining vehicle: in fig. 3 the traction mechanism is schematically represented by the driving wheels 112 and 113 and their drive shafts 110 and 111. The mining vehicle comprises a traction motor 303 for driving the traction mechanism. A relatively simple dropbox-type transmission 304 is provided for converting the rotating movement of the output shaft of the traction motor 303 into the desired mechanical movement in the traction mechanism. In an even more straightforward implementation of the traction system the transmission 304 could be omitted altogether, and one or more traction motors 303 could be placed directly on corresponding one or more drive shafts or even integrated with the respective driving wheels. Reasons that allow using a simpler form of transmission than in prior art are discussed in more detail later in this text.

There may be two or more traction motors, either because they drive their respective separate parts of the traction mechanism or because they can be used in an alternating manner. One embodiment is such where to so-called through-shaft traction motors are provided on a drive shaft, one of them being used when a large torque is needed while the other is used when high speed at lighter load is needed.

A cable connection is provided for connecting the mining vehicle to an external source of electric energy. In fig. 3 the cable connection comprises a connector 103, a tether cable 104, and a cable reel 105 from which a suitable length of tether cable 104 can be released, preferably automatically, so that the mining vehicle has sufficient operational freedom without leaving unnecessary slack of cable.

The mining vehicle comprises an electric power link 301 between the cable connection and the traction motor 303 for conveying electric energy from the cable connection to the traction motor 303. In conformity with the commonly used terminology on this technical field, a power link is the main delivery backbone of electric energy onboard the electrically driven mining vehicle. Depending on whether electric power is transferred over the power link in AC or DC form, the terms AC power link and DC power link are used. In fig. 3 the electric power link 301 is or comprises a DC power link. The mining vehicle comprises a DC/AC converter 302 for converting DC power from the DC power link into AC power for feeding into the traction motor 303. In order to unambiguously differentiate the DC/AC converter 302 from possible other converters in the mining vehicle it can be called a traction DC/AC converter.

As the presence of the traction DC/AC converter 302 reveals, the traction motor 303 is preferably an AC motor. Basically a DC motor could be used as the traction motor 303, but AC motors have a number of advantages including robustness, lower need of servicing, easier adaptation to explosive environments, high efficiency, and better power-to-weight and power-to-volume ratios. A particularly advantageous kind of an AC traction motor is a permanent magnet AC motor, because its power-to-volume ratio is high. As a consequence, using a permanent magnet AC motor as the traction motor 303 allows fitting a powerful traction system in a confined space.

It is advantageous to use a frequency converter drive as the traction DC/AC converter 302. This way the necessary changes in rotation rate can be made in the electric domain rather than in a mechanical transmission like that of the prior art solution of fig. 1. This is also the explanation of why a simple, dropbox-type transmission 304 can be used instead of the more complicated transmission systems of prior art. The dropbox-type transmission 304 only needs to transfer the rotating movement of the output shaft of the traction motor 303 at a fixed gear ratio to the drive shafts 110 and 111.

The mining vehicle may comprise one or more actuators for performing other work than propelling the mining vehicle. Examples of such actuators are the lifting mechanisms that move the bucket of a loader. One or more actuator motors may be coupled to the DC power link 301 through their respective drives for driving such actuator motors with electric energy drawn from the DC power link. Additional DC/AC converters 305 and 306 and respective AC electric motors 307 and 308 are shown schematically in fig. 3. The DC/AC converters 305 and 306 draw DC electric power from the DC power link 301 and convert it into AC power of suitable voltage and frequency for use by the respective AC electric motors 307 and 308. These may be used for various purposes, such as for driving actuators; for driving hydraulic pumps that in turn drive actuators; for driving the cable drum or reel 105; for driving compressors that produce compressed air; for driving blowers of breathable air in a cabin; and the like. There may be also other kind of electric devices coupled to draw their operating power from the DC power link 301, like lamps, computers, communications devices, imaging devices, measurement devices, and the like.

The electrically driven mining vehicle of fig. 3 comprises a local electric energy storage 309 coupled to the DC power link 301 for providing electric power to the DC power link 301 at least for durations when the cable connection is not connected to any external source of electric energy. In the following the designation "tramming battery" is used for the local electric energy storage 309, because from the technological point of view its most feasible form of implementation is a rechargeable battery, and because an important possible use of the battery is for tramming, i.e. for carrying a load of rock or ore with a loader (which is a prominent example of an electrically driven mining vehicle) from one point to another within a mine or quarry. It is also common on this technical field to speak of a tramming battery in the sense meant here. The use of the expression tramming battery does not, however, limit the actual implementation or the actual use of the local electric energy storage.

In case the voltage levels of the tramming battery and the DC power link are not the same, the mining vehicle may comprise a DC/DC converter 310 coupled between the tramming battery 309 and the DC power link 301 for performing voltage conversions between a battery voltage level and a power link voltage level.

The mining vehicle may comprise, preferably integrated with the tramming battery 309 and/or the DC/DC converter 310, a battery charger that is configured to selectively charge the tramming battery 309 when excess energy is available on the DC power link. Several factors may lead to the provision of excess energy. One of them is a situation in which the power carrying capability of the cable connection (and the power delivery capability of the external electricity grid or other external source, such as a generator carriage) is at least momentarily larger than the total amount of power that is momentarily needed for other purposes within the mining vehicle, i.e. for tramming, maintaining hydraulic pressure, moving actuators, and the like. In such case some electric energy that is drawn from the external source through the cable connection may be used to charge the tramming battery. Another possible case of excess energy is electric energy regenerated in the mining vehicle. Regenerating may take place for example in the traction motor 303 when it is used for braking when the mining vehicle moves downhill. Regenerating may take place also elsewhere in the mining vehicle, like in actuators for example if there are electrically driven actuators that can be used to brake the falling movement of a heavy load.

If the only purpose of the tramming battery 309 would be to act as a storage of electric energy to be used for the durations when the cable connection is disconnected, it could be advantageous to make the battery charger maintain the tramming battery 309 as fully charged as possible. However, there could occur a situation in which braking through regeneration would otherwise be possible but the regenerated energy could not be directed anywhere because the tramming battery 309 was full already. Therefore, according to an advantageous embodiment, the mining vehicle may comprise a charge level controller configured to maintain a charge level of the tramming battery 309 at a predetermined level when the cable connection is connecting the mining vehicle to the external source. The predetermined level may be selected so that it leaves room for some regenerated energy to be directed to the tramming battery 309 at all times.

If such a charge level controller is provided, in an advantageous embodiment it may be controllable for allowing dynamic setting of the predetermined level. As an example, the driver of an electrically driven loader may give control commands for setting the predetermined charge level of the tramming battery to less than full, say like 50-70% of full, for the duration of loading operations. This way the driver may allow for any possible braking through regeneration, by ensuring that the tramming battery 309 is capable of receiving the regenerated energy. When the driver knows that loading operations at one location are about to end and the loader will next need to move to a different location, disconnecting the cable connection in between, the driver may give control commands for setting the predetermined charge level closer to full. This way the driver may ensure that a large amount of electric energy will be in store for the duration when the cable connection remains disconnected.

When the vehicle is at the new location and the cable connection is again in place, the driver may again give a control command, this time lowering the predetermined charge level to ensure that at braking or in some other situation where excess energy needs to be dumped quickly at least some of it can be driven into the tramming battery 309. Depending on factors like the implementation of the charge level controller and the selected charge managing strategy, a lowered predetermined charge level can be achieved slower by using some of the excess charge in the tramming battery to operating the systems of the vehicle, or faster by discharging charge backwards into the electricity grid.

The mining vehicle may comprise, possibly integrated with the battery charger and/or the DC/DC converter 310, a boost energy controller that is configured to selectively feed electric energy from the tramming battery 309 to the DC power link 301 during times when the cable connection is connecting the mining vehicle to an external source of electric energy. The purpose of such action would be to temporarily boost the amount of electric energy that is available on the DC power link to more than what is available through the cable connection. This way for example an electrically driven loader may carry heavier loads and/or clear steeper uphill sections than if the maximum amount of energy available through the cable connection would be decisive at all times. Such a feature is very useful in mines that have a somewhat weak electricity grid that cannot deliver high amounts of power. The feature may also enable rating the cable connection of the mining vehicle for a lower peak power, which is advantageous because a thinner and/or longer cable can be used, and/or the cable reel section and all associated components can be made smaller.

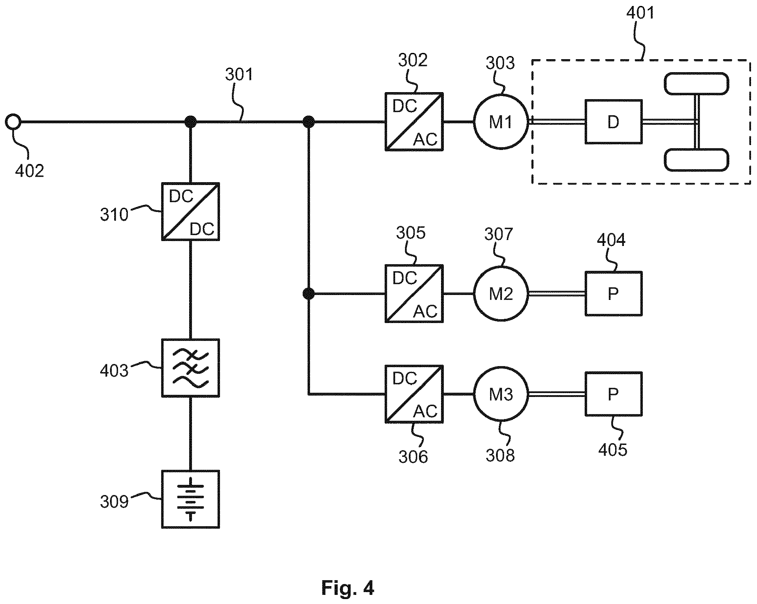

Fig. 4 illustrates an electric energy delivering and storage system of a mining vehicle in the form of a connection diagram. A number of components that have less significance to the description here, like switches and control connections, are omitted for the sake of graphical clarity. The mining vehicle comprises a traction mechanism 401 for propelling the mining vehicle, a traction motor 303 for driving the traction mechanism 401, and a cable connection 402 for connecting the mining vehicle to an external source of electric energy. An electric power link 301 is provided between the cable connection 402 and the traction motor 303 for conveying electric energy from the cable connection 402 to the traction motor 303. The electric power link 301 comprises a DC power link, and the mining vehicle comprises a traction DC/AC converter for converting DC power from the DC power link 301 into AC power for feeding into the traction motor 303.

According to the embodiment of fig. 4 the mining vehicle comprises a local electric energy storage 309, coupled to the DC power link 301 for providing electric power to the DC power link 301 at least for durations when the cable connection 402 is not connected to any external source of electric energy. The local electric energy storage 309 can be called a tramming battery, as has been explained above. A DC/DC converter 310 may be coupled between the tramming battery 309 and the DC power link 301 for performing voltage conversion between a battery voltage level and a power link voltage level. A low pass filter 403 may be provided between the DC/DC converter 310 and the tramming battery 309 for protecting the latter from the disadvantageous effects of higher-frequency signal components that may originate from the operation of the DC/DC converter 310.

A battery charger may be provided, possibly integrated with the DC/DC converter 310 and/or the tramming battery 309, and configured to selectively charge the tramming battery 309 when excess energy is available on the DC power link 301. A charge level controller may be provided, possibly integrated with the DC/DC converter 310 and/or the tramming battery 309, and configured to maintain a charge level of the tramming battery 309 at a predetermined level when the cable connection 402 is connecting the mining vehicle to the external source. The charge level controller, if provided, may be controllable for allowing dynamic setting of the predetermined level. A boost energy controller may be provided, possibly integrated with the DC/DC converter 310 and/or the tramming battery 309, and configured to selectively feed electric energy from the tramming battery 309 to the DC power link 301 when the cable connection 402 is connecting the mining vehicle to the external source for temporarily boosting the amount of electric energy available on the DC power link 301 to more than is available through the cable connection 402.

Controller functions like a charge level controller and/or a boost energy controller can alternatively be located within a centralized control unit of the mining vehicle, often referred to as the VCU (Vehicle Control Unit). Additionally or alternatively the controller functions may be distributed, so that some part (s) of them reside in the VCU while other are located elsewhere in the vehicle, like integrated in the DC/DC converter 310 and/or the tramming battery 309 for example.

According to the embodiment of fig. 4 the mining vehicle may comprise one or more actuators for performing other work than propelling the mining vehicle. Examples of such actuators are presented in fig. 4 as pumps 404 and 405. One or more actuator motors 307 and 308 may be coupled to the DC power link 301 through their respective drives 305 and 306 for driving the actuator motors 307 and 308 with electric energy drawn from the DC power link 301.

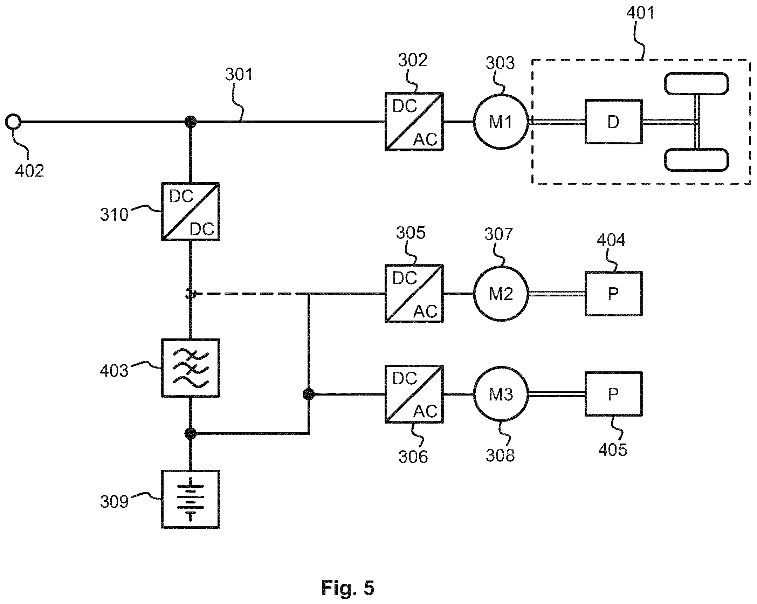

Fig. 5 illustrates and embodiment that is otherwise similar to that of fig. 4, but the coupling of the drives 305 and 306 of the actuator motors 307 and 308 is not direct but goes through the DC/DC converter 310 (and possibly also through the low pass filter 403). How the coupling of other subsystems than the traction system is made to the DC power link 301 depends on the voltage levels that are available and required at the various parts and components of the electric system, and can be selected according to what is the most appropriate for each subsystem. Thus for example in fig. 5 the first drive 305 of the first actuator motor 307 could be coupled directly to the DC power link 301 and the second driver 306 of the second actuator motor 308 could be coupled like shown in the drawing.

A feature common to the embodiments of figs. 3 to 5 is that the cable connection of the mining vehicle is a DC cable connection. In other words, the external source of electric energy is expected to offer DC connection points, to which the tether cable of the electrically driven mining vehicle can be connected with a suitable connector. There are various ways in which an electricity grid in a mine or quarry can be made to offer such DC connection points. Fig. 3 illustrates one example, in which there is a conventional AC electricity grid 101, but each connection point is equipped with means for converting the AC voltage of the AC electricity grid 101 into a DC voltage of a suitable magnitude. In the example of fig. 3 the connection point comprises a transformer 311 as well as a rectifying and filtering unit 312 between the AC electricity grid 101 and the DC connection socket 313. Another possibility is to construct a DC electricity grid throughout the mine or quarry, or at least throughout those parts of it where electrically driven mining vehicles with DC cable connections are to be used. Yet another possibility is to set up a DC microgrid on a particular area, with a centralized AC/DC conversion and filtering station from which DC delivery lines are drawn to a desired number of DC connection sockets distributed across the coverage area of the DC microgrid.

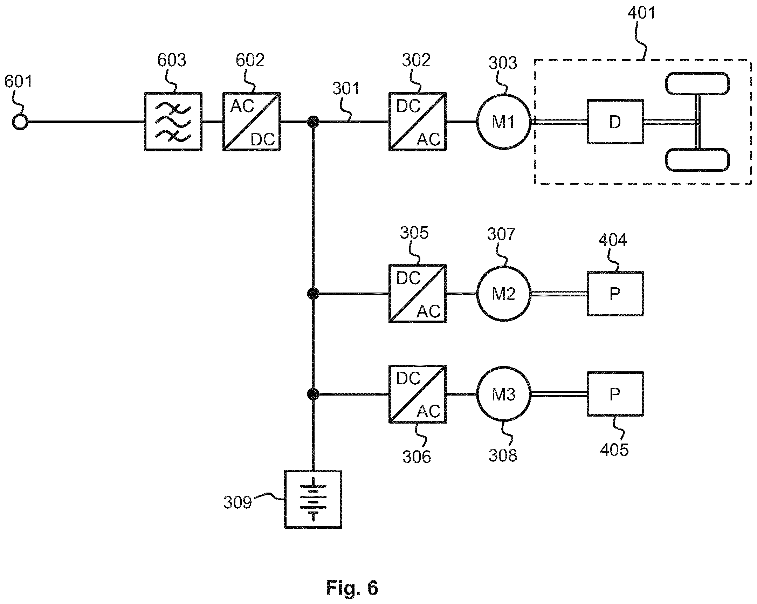

Fig. 6 illustrates an alternative embodiment of an electric energy delivering and storage system of an electrically driven mining vehicle. Parts that are similar to those in figs. 3 to 5 and serve similar purpose are shown with the same reference designators. In fig. 6 the cable connection 601 is an AC cable connection. The mining vehicle comprises an AC to DC converter 602 between the cable connection 601 and the DC power link 301. The purpose of the AC to DC converter 602 is to make voltage conversion between an AC voltage of the cable connection 601 (which may be the same as the AC voltage of the electricity grid or some other voltage produced from it upstream from the parts shown in fig. 6) and a DC voltage of the DC power link 301. In the embodiment of fig. 6 there is also provided a filter, here shown as a band pass filter 603, between the cable connection 601 and the AC to DC converter 602. One purpose of using such a filter is to ensure that high-frequency interference that may be generated in the various voltage conversions in the mining vehicle will not propagate into the electricity grid, while the AC frequency of the electricity grid can freely pass through the cable connection 601 up to the AC to DC converter 602.

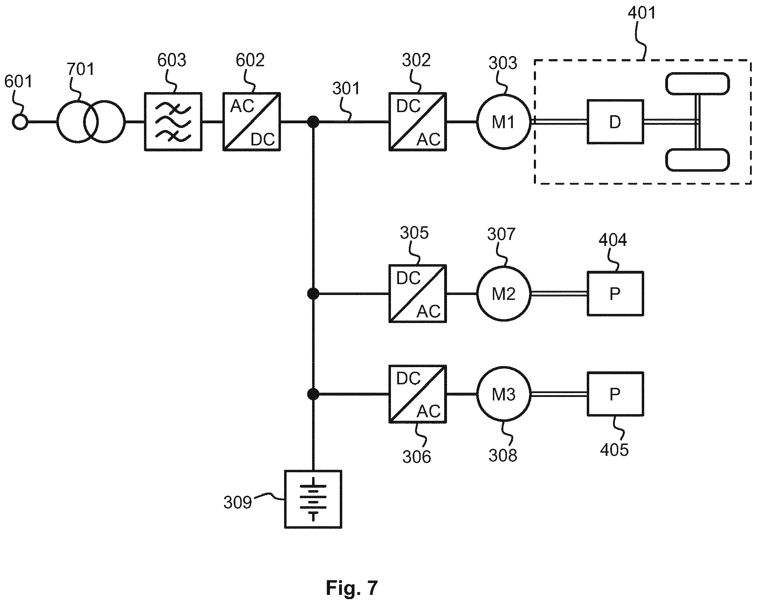

Fig. 7 illustrates another alternative embodiment of an electric energy delivering and storage system of an electrically driven mining vehicle. Parts that are similar to those in figs. 3 to 6 and serve similar purpose are shown with the same reference designators. Like in fig. 6, also in fig. 7 the cable connection 601 is an AC cable connection, and the mining vehicle comprises an AC to DC converter 602 between the cable connection 601 and the DC power link 301. Additionally the mining vehicle of fig. 7 comprises a transformer 701 between the cable connection 601 and the AC to DC converter 602 for making an AC to AC voltage conversion from the electricity grid voltage to an AC voltage level that is more suitable for the AC to DC converter 602. Using an on-board transformer 701 involves the advantage that the mining vehicle can be made suitable for any voltage in the external electricity grid, like the 600 VAC or 1000 VAC voltages that are readily available in a large number of mines and other application areas of vehicles of the kind described here.

The magnitudes of the voltages at various parts of the electrically driven mining vehicle can be selected to support best the selection of components with the most appropriate power rating and other characteristics such as size and weight. In many cases an advantageous rated voltage of the DC power link is between 565 and 1000 VDC. More detailed voltage ranges for the rated voltage of the DC power link may be for example 650-750 VDC, 925-1000 VDC, 565-750 VDC.

For example in the embodiment of fig. 4 the rated voltage of the DC power link 301 may be for example 650-750 VDC. This may be a bit high a DC voltage for a typical tramming battery 309, for which reason the DC/DC converter 310 of fig. 3 performs a voltage conversion between a lower battery voltage level, like in the order of 500-600 VDC for example, and the power link voltage level.

Comparing figs. 4 and 5, due to the high power of the traction motor 303 it may be advantageous to have a relatively high DC voltage at the input of the traction DC/AC converter 302, while a lower DC voltage would be more advantageous at the input of the DC/AC converters 305 and 306 of the AC electric motors 307 and 308. Thus in the embodiment of fig. 5 the rated voltage of the DC power link 301 may be for example 925-1000V, while the rated voltage in the "battery domain", i.e. behind the DC/DC converter 310, may be lower, like 565-750 VDC. A rule of thumb is that the headroom left for DC to DC conversion should be at least about 40 volts, so the rated voltage in the "battery domain" may be higher, up to like 885 VDC (which is 40 V lower than the 925 V mentioned above) . In the embodiments of figs. 6 and 7 the rated voltage of the DC power link 301 may be for example 565-750 VDC.

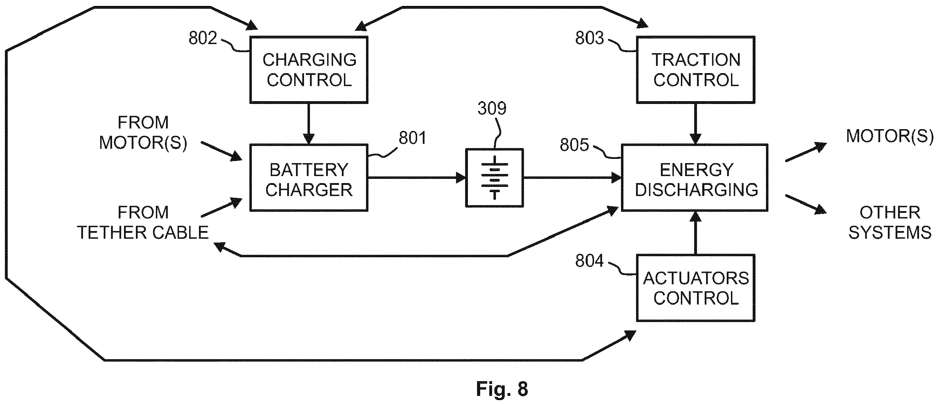

Fig. 8 illustrates an example of some operations related to charging and discharging a local electric energy storage, shown in the middle as a tramming battery 309. A battery charger 801 is configured to selectively charge the tramming battery 309 when excess energy is available. As shown on the left in the drawing, the source of such excess energy may be the cable connection and tether cable, or motors on board the mining vehicle that are capable of regenerating energy for example during braking. A charging controller 802 controls the operation of the battery charger on the basis of control commands and indicator information that it may receive from various sources. As examples of such sources there are shown the traction control system 803 and the actuators control system 804 that also control the processes 805 that may discharge energy from the tramming battery. As shown on the right in the drawing, energy may be discharged to the various electric motors of the mining vehicle as well as to other electricity-operated systems on board.

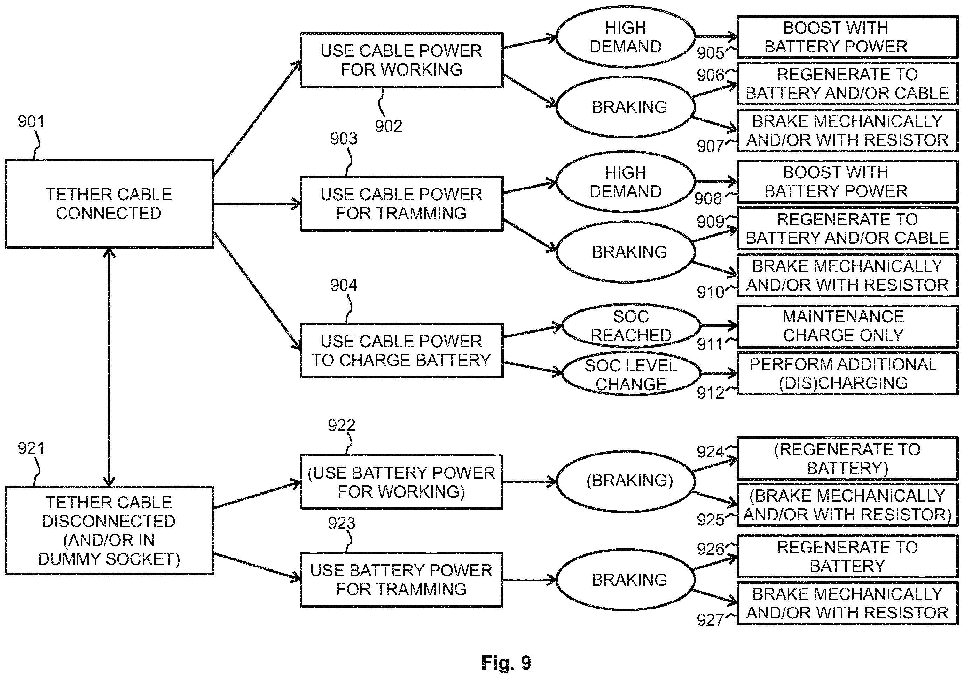

Fig. 9 illustrates an example of strategies of power management on board an electrically driven mining vehicle. As shown on the left in the drawings, different power management strategies may apply depending on whether the tether cable is connected to an external source of electric energy (block 901) or not (block 921). The control systems of the electrically driven mining vehicle may detect the latter condition simply by monitoring an appropriate electrical parameter of the cable connection, like an electric current through the cable connection. Additionally or alternatively there may be a so-called dummy socket in the mining vehicle, to which the connector at the end of the tether cable is connected when it is not connected to a connection point of an external source. By monitoring the state of the dummy socket the control systems of the electrically driven mining vehicle may obtain information of whether electric energy from an external source is available or not.

The normal working mode of the electrically driven mining vehicle is assumed to be one in which the tether cable is connected to an external source of electric energy (block 901). Electric power received through the cable connection may then be used for working (i.e. operating actuators) as in block 902 and/or tramming (i.e. operating the traction mechanism) as in block 903. Additionally electric power received through the cable connection may be used for charging the tramming battery as in block 904. Blocks 902, 903, and 904 are not exclusive alternatives of each other but all these actions may take place simultaneously to the extent required at any moment.

High demand of power in working may be met by using battery power to temporarily boost the amount of electric energy available on the DC power link to more than what is available through the cable connection, as in block 905. In a braking situation, like when braking the falling movement of a heavy load, regenerated energy can be used to charge the tramming battery or be fed back into the electricity grid as in block 906. Braking can also be performed by using mechanical or hydraulic brakes, or by converting regenerated energy into heat in a braking resistor as in block 907. A hydraulic choke valve can also be used as a "braking resistor" if needed. The same alternatives are available for high demand of power in tramming, or braking during tramming, as illustrated in blocks 908, 909, and 910 in fig. 9.

The charging of the tramming battery as illustrated by block 904 can be performed with a predetermined SOC (state of charge) level as the target. When the predetermined SOC level has been reached, only maintenance charging is applied as in block 911 in order to maintain the charge level of the tramming battery at the predetermined level; this may involve temporarily increasing the rate of charging if a temporary boosting action like those of blocks 905 or 908 has depleted some of the previously stored charge. If a dynamically controlled charge level controller is in use and a change occurs in the predetermined SOC level, additional charging or discharging may be performed as in block 912 in order to achieve the new, changed SOC level.

In the operating mode represented by block 921 the tether cable is not connected to any external source of electric energy, so only stored energy taken from the tramming battery is available on the DC power link. It is possible to use such energy in actuators as in block 922, although in many cases this it is more reasonable to use the stored energy to drive the mining vehicle, as in block 923, to a new location at which the tether cable can again be connected. Whether working or tramming or both with battery power, braking may cause using regenerated energy to charge the battery as in block 924 and 926. Braking can also be done mechanically or hydraulically, or with a braking resistor, as in blocks 925 and 927.

It is obvious to a person skilled in the art that with the advancement of technology, the basic idea of the invention may be implemented in various ways. The invention and its embodiments are thus not limited to the examples described above, instead they may vary within the scope of the claims. As an example, all voltage levels that have been mentioned here are just examples, and other voltage levels can be used without parting from the scope of protection defined by the claims.

## Claims

1. Mining vehicle, comprising:
- a traction mechanism for propelling the mining vehicle,
- a traction motor for driving said traction mechanism,
- a cable connection for connecting the mining vehicle to an external source of electric energy, and
- an electric power link between said cable connection and said traction motor for conveying electric energy from said cable connection to said traction motor,
**characterized in that**
- said electric power link comprises a DC power link, and
- the mining vehicle comprises a traction DC/AC converter for converting DC power from said DC power link into AC power for feeding into said traction motor.

2. A mining vehicle according to claim 1, wherein said traction motor is a permanent magnet AC motor.

3. A mining vehicle according to claim 1 or 2, wherein said traction DC/AC converter is a frequency converter drive.

4. A mining vehicle according to any of the previous claims, comprising a local electric energy storage coupled to said DC power link for providing electric power to said DC power link at least for durations when said cable connection is not connected to any external source of electric energy.

5. A mining vehicle according to claim 4, comprising a DC/DC converter coupled between said local electric energy storage and said DC power link for performing voltage conversion between a battery voltage level and a power link voltage level.

6. A mining vehicle according to any of claims 4 or 5, comprising a battery charger configured to selectively charge said local electric energy storage when excess energy is available on the DC power link.

7. A mining vehicle according to claim 6, wherein said battery charger is configured to perform said selective charging of said local electric energy storage with electric energy originating from at least one of the following: electric energy drawn from said external source through said cable connection, electric energy regenerated in the mining vehicle.

8. A mining vehicle according to claim 7, comprising a charge level controller configured to maintain a charge level of said local electric energy storage at a predetermined level when said cable connection is connecting the mining vehicle to the external source.

9. A mining vehicle according to claim 8, wherein said charge level controller is controllable for allowing dynamic setting of said predetermined level.

10. A mining vehicle according to any of claims 4 to 9, comprising a boost energy controller configured to selectively feed electric energy from said local electric energy storage to said DC power link when said cable connection is connecting the mining vehicle to the external source for temporarily boosting the amount of electric energy available on the DC power link to more than is available through said cable connection.

11. A mining vehicle according to any of the preceding claims, wherein a rated voltage of said DC power link is between 565 and 1000 VDC.

12. A mining vehicle according to claim 11, wherein the rated voltage of said DC power link is one of: 650-750 VDC, 925-1000 VDC, 565-750 VDC.

13. A mining vehicle according to any of the preceding claims, comprising one or more actuators for performing other work than propelling the mining vehicle, and one or more actuator motors coupled to said DC power link through their respective drives for driving said actuator motors with electric energy drawn from the DC power link.

14. A mining vehicle according to any of the preceding claims, wherein said cable connection is a DC cable connection.

15. A mining vehicle according to any of claims 1 to 13, wherein:
- said cable connection is an AC cable connection, and
- the mining vehicle comprises an AC to DC converter between said cable connection and said DC power link for making voltage conversion between an AC voltage of said cable connection and a DC voltage of said DC power link.
